(19) Europäisches Patentamt
European Patent Office
Office européen des brevets

(11) Veröffentlichungsnummer : **0 062 809**
**B1**

(12) **EUROPÄISCHE PATENTSCHRIFT**

(45) Veröffentlichungstag der Patentschrift : **23.05.84**

(51) Int. Cl.³ : **C 08 K 5/06**, C 08 L 21/00, C 08 L 7/00

(21) Anmeldenummer : **82102542.6**

(22) Anmeldetag : **26.03.82**

(54) **Verwendung von offenkettigen Acetalen oder Ketalen als nichtverfärbende Ozonschutzmittel.**

(30) Priorität : **10.04.81 DE 3114639**

(43) Veröffentlichungstag der Anmeldung : **20.10.82 Patentblatt 82/42**

(45) Bekanntmachung des Hinweises auf die Patenterteilung : **23.05.84 Patentblatt 84/21**

(84) Benannte Vertragsstaaten : **DE FR GB IT**

(56) Entgegenhaltungen : **DE-A- 2 548 911**

(73) Patentinhaber : **BAYER AG**
**Konzernverwaltung RP Patentabteilung**
**D-5090 Leverkusen 1 Bayerwerk (DE)**

(72) Erfinder : **Brück, Dieter Wolfram, Dr.**
**Elisabeth-Breuer-Strasse 10**
**D-5000 Koeln 80 (DE)**
Erfinder : **Jeblick, Werner, Dr.**
**Walter-Flex-Strasse 30**
**D-5090 Leverkusen (DE)**
Erfinder : **Königshofen, Heinrich, Dr.**
**Am Mühlenberg 26**
**D-5060 Bergisch-Gladbach 2 (DE)**
Erfinder : **Roos, Ernst, Dr.**
**Am Geusgarten 6**
**D-5068 Odenthal (DE)**
Erfinder : **Ruetz, Lothar, Dr.**
**Wilhelm-Busch-Strasse 37**
**D-4047 Dormagen (DE)**

**EP 0 062 809 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist die Verwendung von offenkettigen Acetalen/Ketalen der Formel I mit mindestens einer cyclischen, ungesättigten Bindung zur Herstellung von nichtverfärbenden, gegen Ozonabbau geschützten, natürlichen oder synthetischen Kautschuken.

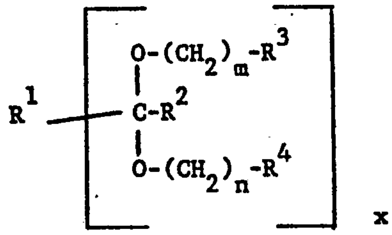

In der Formel I können bedeuten :

n, m = gleich oder verschieden, ganze Zahlen von 0-12,

x = 1, 2,

$R^1$, $R^2$ = gleich oder verschieden, Wasserstoff, $C_1$-$C_5$-Alkyl gegebenenfalls ein oder mehrmals substituiert durch Halogen und/oder $C_1$-$C_4$-Alkyl, $C_1$-$C_6$-Alken(dien)yl gegebenenfalls ein oder mehrmals substituiert durch Halogen und/oder $C_1$-$C_4$-Alkyl, $C_5$-$C_7$-Cyclo- oder Bicycloalkenyl, gegebenenfalls ein oder mehrmals substituiert durch Halogen und/oder $C_1$-$C_4$-Alkyl, $C_6$-$C_{10}$-Aryl, gegebenenfalls ein oder mehrmals substituiert durch Halogen und/oder $C_1$-$C_4$-Alkyl und/oder $C_1$-$C_4$-Alkoxy, $C_7$-$C_8$-Alkylaryl, gegebenenfalls ein oder mehrmals substituiert durch Halogen und/oder $C_1$-$C_4$-Alkyl und/oder Alkoxy, $C_5$-$C_6$-Heteroaryl mit einem oder mehreren O, S, N als Heteroatom.

$R^3$, $R^4$ gleich oder verschieden $R^1$ oder $R^2$, wobei mindestens einer des Reste $R^1$, $R^2$, $R^3$ oder $R^4$ einen cyclischen oder bicyclischen ungesättigten $C_5$-$C_7$-Rest darstellt.

Im Falle x = 2 stellt der Rest $R^1$ oder $R^2$ einen $C_1$-$C_5$-Alkylen-, $C_1$-$C_6$-Alken(dien)ylen-, $C_5$-$C_7$-Cycloalkylen-, $C_6$-$C_{10}$-Arylen- oder einen $C_7$-$C_8$-Alkylarylenrest dar. Die Reste können wie oben näher erwähnt; substituiert sein.

Als Beispiele für die Verbindungen können genannt werden, ohne damit jedoch die Art und den Umfang der Erfindung zu beschränken :

Formaldehyd-bis-($\Delta^3$-tetrahydrobenzyl)acetal
Formaldehyd-bis-($\Delta^3$-methyltetrahydrobenzyl)acetal
Formaldehyd-bis-(bicyclo [2,2,1]-hept-5-en-2ylmethyl)acetal
Acetaldehyd-bis-($\Delta^3$-tetrahydrobenzyl)acetal
Monochloracetaldehyd-bis-($\Delta^3$-tetrahydrobenzyl)acetal
Monochloracetaldehyd-bis-(bicyclo [2,2,1]-hept-5-en-2ylmethyl)acetal
Trichloracetaldehyd-bis($\Delta^3$-tetrahydrobenzyl)acetal
Benzaldehyd-bis-($\Delta^3$-methyltetrahydrobenzyl)acetal
Benzaldehyd-bis-(bicyclo [2,2,1]-hept-5-en-ylmethyl)acetal
Furfural-bis-($\Delta^3$-tetrahydrobenzyl)acetal
Dihydropyran-2-aldehyd-bis-($\Delta^3$-tetrahydrobenzyl)acetal
Pyridin-2-aldehyd-bis($\Delta^3$-tetrahydrobenzyl)acetal
Methyl-cyclohex-3-enylketon-bis-(bicyclo [2,2,1]-hept-5-en-2ylmethyl)ketal
Methyl-cyclohex-3-enylketon-bis-($\Delta^3$-tetrahydrobenzyl)ketal
Methyl-cyclohex-3-enylketon-bis-benzyl-ketal
Methyl-cyclohex-3-enylketon-bis-ethyl-ketal
Aceton-bis-($\Delta^3$-tetrahydrobenzyl)ketal
Aceton-bis-(bicyclo [2,2,1]-hept-5-en-2-ylmethyl)ketal
$\Delta^3$-Tetrahydrobenzaldehyd-bis-($\Delta^3$-tetrahydrobenzyl)acetal
$\Delta^3$-Tetrahydrobenzaldehyd-bis-ethyl-acetal
$\Delta^3$-Tetrahydrobenzaldehyd-bis-benzyl-acetal
$\Delta^3$-Tetrahydrobenzaldehyd-bis-(bicyclo [2,2,1]-hept-5-en-2-ylmethyl)acetal
$\Delta^3$-Methyltetrahydrobenzaldehyd-bis-($\Delta^3$-tetrahydrobenzyl)acetal
$\Delta^3$-Methyltetrahydrobenzaldehyd-bis-($\Delta^3$-methyltetrahydrobenzyl)acetal
$\Delta^3$-Methyltetrahydrobenzaldehyd-bis-(bicyclo-[2,2,1]-hept-5-en-2-ylmethyl)acetal
$\Delta^3$-Methyltetrahydrobenzaldehyd-bis-benzylacetal
$\Delta^3$-Methyltetrahydrobenzaldehyd-bis-cyclohexylacetal
Bicyclo-[2,2,1]-hept-5-en-2-aldehyd-bis-($\Delta^3$-tetrahydrobenzyl)acetal
Bicyclo-[2,2,1] hept-5-en-2-aldehyd-bis-($\Delta^3$methyltetrahydrobenzyl)acetal
Bicyclo-[2,2,1] hept-5-en-2-aldehyd-bis-(bicyclo-[2,2,1]-hept-5-en-2-ylmethyl)acetal
Bicyclo-[2,2,1] hept-5-en-2-aldehyd-bis-benzyl-acetal

Bicyclo-[2,2,1] hept-5-en-2-aldehyd-bis-cyclohexyl-acetal

Bevorzugt werden davon :

$\Delta^3$-Tetrahydrobenzaldehyd-bis-($\Delta^3$-tetrahydrobenzyl)acetal
$\Delta^3$-Tetrahydrobenzaldehyd-bis-bicyclo [2,2,1]-hept-5-en-2-ylmethyl)acetal
Bicyclo [2,2,1]-hept-5-en-2-aldehyd-bis-($\Delta^3$-tetrahydrobenzyl)acetal
Bicyclo [2,2,1]-hept-5-en-2-aldehyd-bis-bicyclo-[2,2,1]-hept-5-en-2-ylmethyl)acetal
Formaldehyd-bis-($\Delta^3$-tetrahydrobenzyl)acetal
Formaldehyd-bis-(bicyclo-[2,2,1]-hept-5-en-2-ylmethyl)acetal.

Die Herstellung der Acetale oder Ketale kann nach literaturbekannten Verfahren erfolgen, die z. B. durch folgende allgemeine Reaktionsgleichung beschrieben werden.

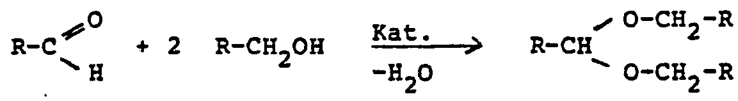


1)

R = $R^1$, $R^2$, $R^3$, $R^4$ wie vorn beschrieben.

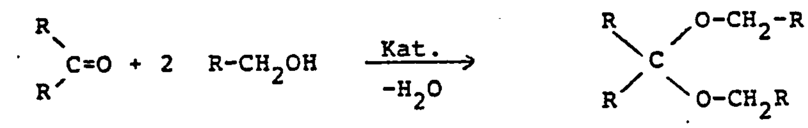


2)

Es ist auch möglich, Gemische von Alkoholen bzw. Gemische von Aldehyden oder Ketonen einzusetzen.

Ein allgemeines Herstellungsbeispiel, nach dem eine bevorzugte Verbindung hergestellt werden kann, gestaltet sich wie folgt :

Die Umsetzung von Formaldehyd mit Bicyclo [2,2,1]-hept-5-en-2-ylmethylalkohol kann in Lösungsmitteln oder ohne Lösungsmittel, mit saurem Katalysator erfolgen. Geeignete Lösungsmittel sind z. B. solche, die mit Wasser ein Azeotrop bilden wie beispielsweise Benzol, Toluol, Cyclohexan, Methylenchlorid usw. Pro Mol Formaldehyd werden dabei mindestens 2 Mol Alkohol benötigt. Die Umsetzung kann auch ohne weiteres Lösungsmittel erfolgen, wobei der Alkohol auch im Überschuß vorliegen kann. Das entstehende Wasser kann destillativ entfernt werden oder gegebenenfalls auch durch Zusatz von wasserentziehenden Mitteln wie beispielsweise Zeolith entfernt werden.

Als Katalysatoren eignen sich Schwefelsäure, Phosphorsäure, p-Toluolsulfonsäure, Schwefeldioxid, Bortrifluorid u. a. Die Aufarbeitung erfolgt nach bekannten Methoden, z. B. durch Destillation im Hochvakuum, Entfernung der flüchtigen Anteile am Dünnschichtverdampfer, Umkristallisation usw.

Die Verbindungen sind feste oder flüssige Substanzen, welche sich gut und homogen im Rohkautschuk einarbeiten und verteilen lassen. Sie entsprechen in ihrer Ozonschutzwirkung den bekannten Ozonschutzmitteln (DE-AS 1 917 600, DE-AS 2 548 911, DE-AS 1 693 163), sind jedoch wesentlich weniger flüchtig, was als großer Vorteil bei der Gummiverarbeitung anzusehen ist. Weiterhin treten bei den Produkten keinerlei Geruchsprobleme auf, so daß hier auf geruchverbessernde Zusätze verzichtet werden kann.

Als geeignete Kautschuke seien genannt :

Naturkautschuk oder Synthesekautschuk, der z. B. aus Butadien, Dimethylbutadien, Chloropren, Isopren und seinen Homologen erhalten wird, oder Mischpolymerisate solcher konjugierter Diolefine mit Vinylverbindungen wie Styrol, α-Methylstyrol, Acrylnitril, Methacrylnitril, Acrylate, Methacrylate sowie Terpolymere aus Ethylen, Propylen mit mindestens einem nichtkonjugierten Dien wie beispielsweise Dicyclopentadien, 5-Ethyliden-2-norbornen oder 1,4-Hexadien.

Die Ozonschutzmittel können in die Kautschuke auf übliche Weise eingemischt werden, beispielsweise auf einem Mischwalzwerk oder im Innenmischer. Sie werden vor oder gleichzeitig mit den anderen Bestandteilen zugesetzt ; können aber auch als letzter Mischungsbestandteil zugegeben werden.

Die Menge der Ozonschutzmittel beträgt 0,05-10 Gew.-% bezogen auf Kautschuk. Die Kautschuke können die üblichen Hilfsmittel enthalten. Als Vulkanisiermittel kann z. B. Schwefel eingesetzt werden. Als Beschleuniger seien genannt : Thiazole wie 2-Merkaptobenzthiazol, Dibenzothiazyldisulfid, Sulfenamide wie Benzothiazyl-2-cyclohexylsulfenamid, Benzothiazyl-2-t-butylsulfenamid oder Benzthiazylsulfensäuremorpholid, Guanidine wie Diphenylguanidin oder Di-o-tolylguanidin, Dithiocarbamate wie Zink-diethyldithiocarbamat, Thiurame wie Tetramethylthiuramdisulfid und Ethylenthioharnstoff. Außerdem können Beschleunigergemische verwendet werden. Weiterhin können andere Hilfsstoffe, beispielsweise Füllstoffe wie Ruß oder Kreide, Antioxidantien, Wachse, Pigmente, Zinkoxid, Stearinsäure und Verarbeitungsöle enthalten sein. Die Vulkanisation des Kautschuks erfolgt durch Erhitzen auf die üblichen Temperaturen, vorzugsweise 120-170 °C, doch kann auch höher oder tiefer gearbeitet werden. Die nachstehenden Beispiele zu den bevorzugten Substanzen sollen die Erfindung erläutern, jedoch in keiner Weise einschränken.

Beispiel 1

Formaldehyd-bis(bicyclo [2,2,1]-hept-5-en-2-ylmethyl)acetal

496 g (4 Mol) Bicyclo [2,2,1]-hept-5-en-2-ylmethylalkohol und 200 g (2 Mol) 30 Gew.-%ige wäßrige Formaldehydlösung werden mit 1,5 g p-Toluolsulfonsäure bei 20 °C zusammengegeben und unter Rühren auf 50-60 °C erhitzt; gleichzeitig wird Wasserstrahlvakuum angelegt, wobei eine zügige Destillation von Wasser aus dem Reaktionsgemisch einsetzt. Wenn die Destillation nachläßt wird die Innentemperatur auf 115 °C gesteigert (2 Stunden). Dann wird im Hochvakuum über eine 15 cm Vigreuxkolonne destilliert. Man erhält ein farbloses Öl.

Kp : 120-125 °C/0,5 mm

Ausbeute : 313 g ≙ 60 % d. Th.

Beispiel 2

Bicyclo [2,2,1]-hept-5-en-2-aldehyd-bis-(bicyclo [2,2,1]-hept-5-en-2ylmethyl)acetal

122 g (1 Mol) Bicyclo [2,2,1]-hept-5-en-2-aldehyd und 248 g (2 Mol) Bicyclo [2,2,1]-hept-5-en-2-ylmethylalkohol werden in 600 ml Cyclohexan gelöst. Dazu gibt man eine Mischung aus 3,5 g p-Toluolsulfonsäure und 2,6 g Chinolin und kocht am Wasserabscheider bis zur Beendigung der Wasserentwicklung. Anschließend wird sorgfältig neutral gewaschen, mit Kaliumcarbonat getrocknet und destilliert. Man erhält ein farbloses Öl, welches wachsartig erstarrt.

Kp : 163-168 °C/0,05 mbar

Ausbeute : 284 g ≙ 80 % d. Th.

Beispiel 3

Folgende Kautschukmischung wurde auf der Walze hergestellt :

| | |
|---|---|
| Polychloropren | 100,0 Gew.-Teile |
| Magnesiumoxid | 4,0 Gew.-Teile |
| Stearinsäure | 0,5 Gew.-Teile |
| Gefällte Kieselsäure (BET-Wert : 180 $m^3$/g) | 20,0 Gew.-Teile |
| Weichkaolin | 170,0 Gew.-Teile |
| Titandioxid | 5,0 Gew.-Teile |
| Antimonoxid | 5,0 Gew.-Teile |
| Naphthenischer Mineralölweichmacher | 20,0 Gew.-Teile |
| Chlorparaffin | 10,0 Gew.-Teile |
| Ethylenthioharnstoff | 1,2 Gew.-Teile |
| Zinkoxid | 5,0 Gew.-Teile |
| Ozonschutzmittel gemäß Tabellen | |

Von diesen Mischungen wurden Prüfkörper von 0,4 × 4,5 × 4,5 cm vulkanisiert (Preßvulkanisation 30 min bei 150 °C).

Je 4 Prüfkörper wurden dann in einem Kunststoffrahmen so eingespannt, daß an der Oberfläche Dehnungen von 10, 20, 30 und 60 % entstehen.

Die gespannten Prüfkörper wurden mit einem Luftstrom, der 1 000 Gew.-Teile Ozon auf 100 Millionen Teile Luft enthielt, bei Raumtemperatur behandelt. Nach jeweils 2, 4, 6, 8, 24, 48, 72, 96 und 168 Stunden wurden die Proben mit dem Auge auf eventuelle Risse untersicht. In den nachfolgenden Tabellen sind jeweils die Stunden bis zur ersten Rißbildung eingetragen. Nach 168 Stunden wurden die Versuche abgebrochen.

Tabelle 1

| Dehnung in % | 10 | 20 | 30 | 60 |
|---|---|---|---|---|
| ohne Ozonschutzmittel (Vergleich) | 24 | 24 | 24 | 8 |
| Formaldehyd-bis-(bicyclo-/2,2,1/-hept-5-en-2-yl-methyl)-acetal (Beispiel 1) | | | | |
| 0,5 Gew.-% | 168 | 168 | 168 | 168 |
| 1,0 Gew.-% | 168 | 168 | 168 | 168 |

Tabelle 2

| Dehnung in % | 10 | 20 | 30 | 60 |
|---|---|---|---|---|
| ohne Ozonschutzmittel (Vergleich) | 48 | 24 | 24 | 6 |
| Bicyclo/2,2,1/-hept-5-en-2-aldehyd-bis-(bicyclo/2,2,1/-hept-5-en-2-ylmethyl)acetal | | | | |
| 0,5 Gew.-% | 168 | 168 | 168 | 168 |
| 1,0 Gew.-% | 168 | 168 | 168 | 168 |

Beispiel 4

Folgende Kautschukmischung wurde auf der Walze hergestellt :

| | |
|---|---|
| Naturkautschuk | 100,0 Gew.-Teile |
| Zinkoxid | 10,0 Gew.-Teile |
| Gefällte Kreide | 160,0 Gew.-Teile |
| Titandioxid | 10,0 Gew.-Teile |
| Stearinsäure | 0,7 Gew.-Teile |
| Ozonschutzwachs | 2,0 Gew.-Teile |
| Dibenzothiazyldisulfid | 1,0 Gew.-Teile |
| Hexamethylentetramin | 0,25 Gew.-Teile |
| Schwefel | 2,2 Gew.-Teile |
| Ozonschutzmittel | 4,0 Gew.-Teile |

Die Prüfkörper werden in der Presse 30 min. bei 140 °C vulkanisiert. Die Prüfung wurde ebenso durchgeführt wie in Beispiel 3 beschrieben, allerdings betrug die Ozonkonzentration statt 1 000 Teilen jetzt 200 Teilen Ozon pro 100 Millionen Teile Luft.

Tabelle 3

| Dehnung in % | 10 | 20 | 30 | 60 |
|---|---|---|---|---|
| ohne Ozonschutzmittel (Vergleich) | 4 | 2 | 2 | 2 |
| Formaldehyd-bis-(bicyclo-/2,2,1/-hept-5-en-2-ylmethyl)-acetal (Beispiel 1) | >168 | 8 | 6 | 2 |

Tabelle 4

| Dehnung in % | 10 | 20 | 30 | 60 |
|---|---|---|---|---|
| ohne Ozonschutzmittel (Vergleich) | 4 | 2 | 2 | 2 |
| Bicyclo-/2,2,1/-hept-5-en-2-aldehyd-bis-(bicyclo-/2,2,1/-hept-5-en-2-ylmethyl)acetal (Beispiel 2) | > 168 | >168 | 6 | 6 |

Beispiel 5

Folgende Kautschukmischung wurde auf der Walze hergestellt :

| | |
|---|---|
| Styrol-Butadien-Mischpolymerisat | 100,0 Gew.-Teile |
| Zinkoxid | 5,0 Gew.-Teile |

| | |
|---|---|
| Ruß (N 220) | 55,0 Gew.-Teile |
| Naphthenischer Mineralölweichmacher | 2,0 Gew.-Teile |
| Hocharomatischer Mineralölweichmacher | 2,0 Gew.-Teile |
| Stearinsäure | 2,0 Gew.-Teile |
| Ozonschutzwachs | 1,0 Gew.-Teile |
| Benzothiazyl-2,2-cyclohexylsulfenamid | 1,3 Gew.-Teile |
| Schwefel | 1,6 Gew.-Teile |
| Ozonschutzmittel gemäß Tabellen | |

Die Prüfkörper werden in der Presse 30 min bei 150 °C vulkanisiert. Die Prüfung wurde ebenso durchgeführt wie in Beispiel 3 beschrieben, allerdings betrug die Ozonkonzentration statt 1 000 Teilen jetzt 200 Teile Ozon pro 100 Millionen Teile Luft.

Tabelle 5

| Dehnung in % | 10 | 20 | 30 | 60 |
|---|---|---|---|---|
| ohne Ozonschutzmittel (Vergleich) | 4 | 2 | 2 | 2 |
| Formaldehyd-bis-(bicyclo[2,2,1]-hept-5-en-2-ylmethyl)-acetal (Beispiel 1) 3,0 Gew.-Teile | >168 | >168 | 2 | 2 |

Tabelle 6

| Dehnung in % | 10 | 20 | 30 | 60 |
|---|---|---|---|---|
| ohne Ozonschutzmittel (Vergleich) | 6 | 2 | 2 | 2 |
| Bicyclo[2,2,1]-hept-5-en-2-aldehyd-bis-(bicyclo[2,2,1]-hept-5-en-2-ylmethyl)acetal (Beispiel 2) 4,0 Gew.-Teile | >168 | >168 | 168 | 2 |

Beispiel 6

Folgende Kautschukmischung wurde auf der Walze hergestellt:

| | |
|---|---|
| Styrol-Butadien-Mischpolymerisat | 50,0 Gew.-Teile |
| Naturkautschuk | 50,0 Gew.-Teile |
| Zinkoxid | 5,0 Gew.-Teile |
| Gefällte Kreide | 120,0 Gew.-Teile |
| Gefällte Kieselsäure (BET-Wert: 180 $m^2/g$) | 35,0 Gew.-Teile |
| Dimethylglykol | 2,5 Gew.-Teile |
| Naphthenischer Mineralölweichmacher | 10,0 Gew.-Teile |
| Stearinsäure | 1,0 Gew.-Teile |
| Ozonschutzwachs | 2,0 Gew.-Teile |
| Benzothiazyl-2-cyclohexylsulfenamid | 0,8 Gew.-Teile |
| Diphenylguanidin | 0,3 Gew.-Teile |
| Tetramethylthiuramdisulfid | 2,0 Gew.-Teile |
| Schwefel | 2,0 Gew.-Teile |
| Ozonschutzmittel | 4,0 Gew.-Teile |

Die Prüfkörper wurden in der Presse 15 min bei 140 °C vulkanisiert. Die Prüfung wurde ebenso durchgeführt wie in Beispiel 3 beschrieben, allerdings betrug die Ozonkonzentration statt 1 000 Teilen jetzt 200 Teile Ozon pro 100 Millionen Teile Luft.

(Siehe Tabelle 7 Seite 7 f.)

Tabelle 7

| Dehnung in % | 10 | 20 | 30 | 60 |
|---|---|---|---|---|
| ohne Ozonschutzmittel (Vergleich) | 6 | 4 | 4 | 2 |
| Formaldehyd-bis-(bicyclo/2,2,1/-hept-5-en-2-ylmethyl)-acetal (Beispiel 1) | 168 | 8 | 4 | 2 |

Tabelle 8

| Dehnung in % | 10 | 20 | 30 | 60 |
|---|---|---|---|---|
| ohne Ozonschutzmittel (Vergleich) | 2 | 2 | 2 | 2 |
| Bicyclo/2,2,1/-hept-5-en-2-aldehyd-bis(bicyclo/2,2,1/-hept-5-en-2-ylmethyl)acetal (Beispiel 2) | >168 | 6 | 6 | 2 |

**Ansprüche**

1. Verwendung von offenkettigen Acetalen oder Ketalen der allgemeinen Formel

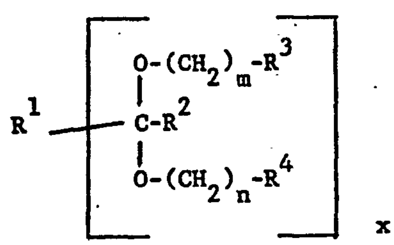

in der

n, m gleich oder verschieden, Zahlen von 0-12,

x 1 oder 2

$R^1$, $R^2$ gleich oder verschieden, Wasserstoff, $C_1$-$C_5$-Alkyl oder Alkylen, gegebenenfalls ein oder mehrfach substituiert durch Halogen und/oder $C_1$-$C_4$-Alkyl ; $C_1$-$C_6$-Alken(dien)yl oder Alken(dien)ylen, gegebenenfalls ein oder mehrmals substituiert durch Halogen und/oder $C_1$-$C_4$-Alkyl ; $C_5$-$C_7$ Cyclo- oder Bicycloalkenyl- oder alkylen, gegebenenfalls ein oder mehrmals substituiert durch Halogen und/oder $C_1$-$C_4$-Alkyl ; $C_6$-$C_{10}$ Aryl oder Arylen, gegebenenfalls ein oder mehrmals substituiert durch Halogen und/oder $C_1$-$C_4$-Alkyl und/oder $C_1$-$C_4$ Alkoxy, $C_7$-$C_8$ Alkylaryl oder Alkylarylen, gegebenenfalls ein oder mehrmals substituiert durch Halogen und/oder $C_1$-$C_4$-Alkyl und/oder Alkoxy $C_5$-$C_6$ Heteroaryl mit einem oder mehreren O, S, N als Heteroatomen

$R^3$, $R^4$ gleich oder verschieden $R^1$ oder $R^2$, wobei mindestens einer der Rest $R^1$, $R^2$, $R^3$ oder $R^4$ einen cyclischen oder bicyclischen ungesättigten $C_5$-$C_7$-Rest darstellt, ist bzw. sind als nichtverfärbende Ozonschutzmittel für natürlichen und/oder synthetischen Kautschuk.

2. Verwendung von Kondensationsprodukten gemäß Anspruch 1, dadurch gekennzeichnet, daß $R^1$ einen cyclischen oder bicyclischen ungesättigten Rest darstellt.

3. Verwendung von Kondensationsprodukten gemäß Anspruch 1, dadurch gekennzeichnet, daß $R^3$ und $R^4$ einen cyclischen oder bicyclischen ungesättigten Rest darstellen.

4. Verwendung von Kondensationsprodukten gemäß Ansprüchen 1-3, dadurch gekennzeichnet, daß diese in Mengen von 0,05-10 Gew.-%, bezogen auf Kautschuk, eingesetzt werden.

**Claims**

1. Use of open-chain acetals or ketals of the general formula

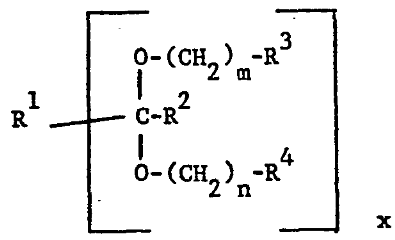

in which

n and m are identical or different and are numbers from 0-12,

x is 1 or 2,

$R^1$ and $R^2$ are identical or different and are hydrogen, $C_1$-$C_5$-alkyl or alkylene, optionally monosubstituted or polysubstituted by halogen and/or $C_1$-$C_4$-alkyl ; $C_1$-$C_6$-alkene(dien)yl or alkene(dien)ylene, or optionally monosubstituted or polysubstituted by halogen and/or $C_1$-$C_4$-alkyl ; $C_5$-$C_7$-cyclo- or bicycloalkenyl- or alkylene, optionally monosubstituted or polysubstituted by halogen and/or $C_1$-$c_4$-alkyl ; $C_6$-$C_{10}$-aryl or arylene, optionally monosubstituted or polysubstituted by halogen and/or $C_1$-$C_4$-alkyl and/or $C_1$-$C_4$-alkoxy, $C_7$-$C_8$-alkylaryl or alkylarylene, optionally monosubstituted or polysubstituted by halogen and/or $C_1$-$C_4$-alkyl and/or alkoxy, or $C_5$-$C_6$-heteroaryl having one or more O, S or N as heteroatoms, and

$R^3$ and $R^4$ are identical or different $R^1$ or $R^2$, and at least one of the radicals $R^1$, $R^2$, $R^3$ and $R_4$ represent an unsaturated cyclic of bicyclic $C_5$-$C_7$ radical, as non-discolouring protective agents against ozone, for natural and/or synthetic rubber.

2. Use of condensation products according to Claim 1, characterised in that $R^1$ represents an unsaturated cyclic or bicyclic radical.

3. Use of condensation products according to Claim 1, characterised in that $R^3$ and $R^4$ represent an unsaturated cyclic or bicyclic radical.

4. Use of condensation products according to Claims 1-3, characterised in that these are employed in amounts of 0.05-10 % by weight, relative to the rubber.

**Revendications**

1. Utilisation d'acétals cycliques de formule générale

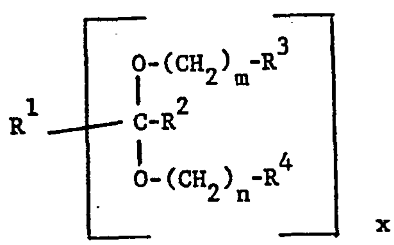

dans laquelle

n, m, identiques ou différents, sont des nombres de 0 à 12,

x est égal à 1 ou 2,

$R^1$, $R^2$, identiques ou différents, représentent l'hydrogène, des groupes alkyle en $C_1$-$C_5$ ou alkylène éventuellement mono- ou poly-substitués par des halogènes et/ou des groupes alkyle en $C_1$-$C_4$ ; alcène en $C_1$-$C_6$-(diène)-yle ou alcène-(diène)-ylène éventuellement mono- ou poly-substitués par des halogènes et/ou des groupes alkyle en $C_1$-$C_4$ ; cyclo en $C_5$-$C_7$- ou bicyclo-alcényle ou alkylène éventuellement mono- ou poly-substitués par des halogènes et/ou des groupes alkyle en $C_1$-$C_4$ ; aryle en $C_6$-$C_{10}$ ou arylène éventuellement mono- ou poly-substitués par des halogènes et/ou des groupes alkyle en $C_1$-$C_4$ et/ou alcoxy en $C_1$-$C_4$, alkylaryle en $C_7$-$C_8$ ou alkylarylène éventuellement mono- ou poly-substitués par des halogènes et/ou des groupes alkyle et/ou alcoxy en $C_1$-$C_4$, hétéroaryle en $C_5$-$C_6$ contenant un ou plusieurs O, S, N en tant qu'hétéroatomes,

$R^3$, $R^4$, identiques ou différents, sont identiques à $R^1$ ou $R^2$, l'un au moins des restes $R^1$, $R^2$, $R^3$ ou $R^4$ étant un reste cyclique ou bicyclique insaturé en $C_5$-$C_7$, en tant qu'agents anti-ozone non colorants pour le caoutchouc naturel et/ou synthétique.

2. Utilisation des produits de condensation selon la revendication 1, caractérisée en ce que $R^1$ est un reste cyclique ou bicyclique insaturé.

3. Utilisation des produits de condensation selon la revendication 1, caractérisée en ce que $R^3$ et $R^4$ représentent un reste cyclique ou bicyclique insaturé.

4. Utilisation des produits de condensation selon la revendication 1 à 3, caractérisée en ce que ceux-ci sont mis en œuvre en quantités de 0,05 à 10 % du poids du caoutchouc.